# EUROPEAN PATENT APPLICATION

(11) **EP 2 760 101 A1**
(43) Date of publication of application: **30.07.2014**
(21) Application number: 11872670.2
(22) Date of filing: 22.09.2011
(51) Int. Cl.: H02J 7/00, B60L 11/18, H01M 10/44, H02J 1/00

(54) **VEHICLE POWER SUPPLY SYSTEM**

(71) Applicant: TOYOTA JIDOSHA KABUSHIKI KAISHA, Toyota-shi, Aichi-ken, 471-8571 (JP)
(72) Inventor: ANG, Wanleng, Toyota-shi Aichi-ken 471-8571 (JP); OKI, Ryouji, Toyota-shi Aichi-ken 471-8571 (JP); SUGIYAMA, Yoshinobu, Toyota-shi Aichi-ken 471-8571 (JP)
(74) Representative: Winter, Brandl, Fürniss, Hübner, Röss, Kaiser, Polte - Partnerschaft
(86) International application number: PCT/JP2011/071630
(87) International publication number: WO 2013/042243

(57) **Abstract**

A power supply system for a vehicle includes: first and second power lines (PL1, NL1) connected to a PCU (120); first and second power storage devices (BAT1, BAT2) each configured to be rechargeable; a capacitor (C1) connected between the first power line (PL1) and the second power line (NL1); a switching unit configured to be able to switch between a first state in which one of the first and second power storage devices (BAT1, BAT2) is connected between the first power line (PL1) and the second power line (NL1), and a second state in which the first and second power storage devices (BAT1, BAT2) are connected in series between the first power line (PL1) and the second power line (NL1); and a control device (300) for setting the switching unit in the first state to charge the capacitor (C1), and thereafter setting the switching unit in the second state to charge the capacitor (C1).

## Description

### TECHNICAL FIELD

The present invention relates to a power supply system for a vehicle, and more particularly to control of a power supply system for a vehicle equipped with a plurality of power storage devices.

### BACKGROUND ART

Power supply systems applied to electrically powered vehicles adopt a configuration in which a plurality of power storage devices are connected in series to allow electric power to be supplied from the plurality of power storage devices to a motor for traveling. As an example of using a plurality of power storage devices connected in series, Japanese Patent Laying-Open No. 2008-288109 (PTD 1) discloses a battery system including an assembled battery having a plurality of serially connected battery modules each composed of a plurality of cells, for supplying electric power from the assembled battery to a load.

### CITATION LIST

### PATENT DOCUMENT

PTD 1: Japanese Patent Laying-Open No. 2008-288109

### SUMMARY OF INVENTION

### TECHNICAL PROBLEM

In the battery system disclosed in PTD 1, a large inrush current (typically, a precharge current for a capacitor) may flow into the load when power supply from the assembled battery to the load is started. Thus, it is necessary to arrange a current-limiting resistor between the assembled battery and the load to limit the inrush current to the load. However, as the number of the serially connected battery modules increases, it is necessary to arrange a current-limiting resistor having a larger capacity, causing an increase in the size of a circuit configuration and cost increase.

Accordingly, the present invention has been made to solve the aforementioned problem, and one object of the present invention is to suppress an inrush current at power-on with a simple and efficient configuration in a power supply system using a plurality of power storage devices connected in series.

### SOLUTION TO PROBLEM

According to an aspect of the present invention, a power supply system for a vehicle includes: a power conversion unit driving a motor for traveling; first and second power lines for transmitting electric power to be input to or output from the power conversion unit; first and second power storage devices each configured to be rechargeable; a capacitor connected between the first power line and the second power line; a switching unit configured to be able to switch between a first state in which one of the first and second power storage devices is connected between the first power line and the second power line, and a second state in which the first and second power storage devices are connected in series between the first power line and the second power line; and a control device for setting the switching unit in the first state to charge the capacitor, and thereafter setting the switching unit in the second state to charge the capacitor.

Preferably, the power supply system for the vehicle further includes third and fourth power lines for transmitting electric power output from a charger for charging the first and second power storage devices during charging of the vehicle by a power supply external to the vehicle. The switching unit includes a first switch connected between a negative terminal of the first power storage device and a positive terminal of the second power storage device, a second switch connected between a positive terminal of the first power storage device and the first power line, a third switch connected between a negative terminal of the second power storage device and the second power line, a fourth switch connected between the positive terminal of the first power storage device and the third power line, a fifth switch connected between the negative terminal of the first power storage device and the fourth power line, and a connection line connected between the second power line and the fourth power line. The control device sets the switching unit in the first state by turning on the second and fifth switches and turning off the first, third, and fourth switches, and sets the switching unit in the second state by turning on the first, second, and third switches and turning off the fourth and fifth switches.

Preferably, the second switch includes a relay connected between the positive terminal of the first power storage device and the first power line, and a resistor connected in series with the relay.

Preferably, the power supply system for the vehicle further includes third and fourth power lines for transmitting electric power output from a charger for charging the first and second power storage devices during charging of the vehicle by a power supply external to the vehicle. The switching unit includes a first switch connected between a negative terminal of the first power storage device and a positive terminal of the second power storage device, a second switch connected between a positive terminal of the first power storage device and the first power line, a third switch connected between a negative terminal of the second power storage device and the second power line, a fourth switch connected between the positive terminal of the second power storage device and the third power line, a fifth switch connected between the negative terminal of the second power storage device and the fourth power line, and a connection line connected between the first power line and the third power line. The control device sets the switching unit in the first state by turning on the third and fourth switches and turning off the first, second, and fifth switches, and sets the switching unit in the second state by turning on the first, second, and third switches and turning off the fourth and fifth switches.

Preferably, the third switch includes a relay connected between the negative terminal of the second power storage device and the second power line, and a resistor connected in series with the relay.

### ADVANTAGEOUS EFFECTS OF INVENTION

According to the present invention, an inrush current at power-on can be suppressed with a simple and efficient configuration in a power supply system using a plurality of power storage devices connected in series.

### BRIEF DESCRIPTION OF DRAWINGS

Fig. 1 is a schematic configuration diagram of a vehicle to which a power supply system in accordance with Embodiment 1 of the present invention is applied.
Fig. 2 is a view illustrating control of system main relays and charging relays during traveling of the vehicle.
Fig. 3 is a view illustrating control of the system relays and the charging relays when a failure occurs in a power storage device.
Fig. 4 is a flowchart illustrating a control processing procedure of the power supply system in accordance with Embodiment 1 of the present invention.
Fig. 5 is a timing chart for illustrating control of the system main relays and a charging relay when a system of the vehicle is started up.
Fig. 6 is a flowchart illustrating a control processing procedure of a power supply system in accordance with Embodiment 2 of the present invention.
Fig. 7 is a view illustrating another exemplary configuration of a power supply system in accordance with an embodiment of the present invention.

### DESCRIPTION OF EMBODIMENTS

Hereinafter, embodiments of the present invention will be described in detail with reference to the drawings. It is noted that, in the drawings, identical or corresponding parts will be designated by the same reference numerals.

### [Embodiment 1]

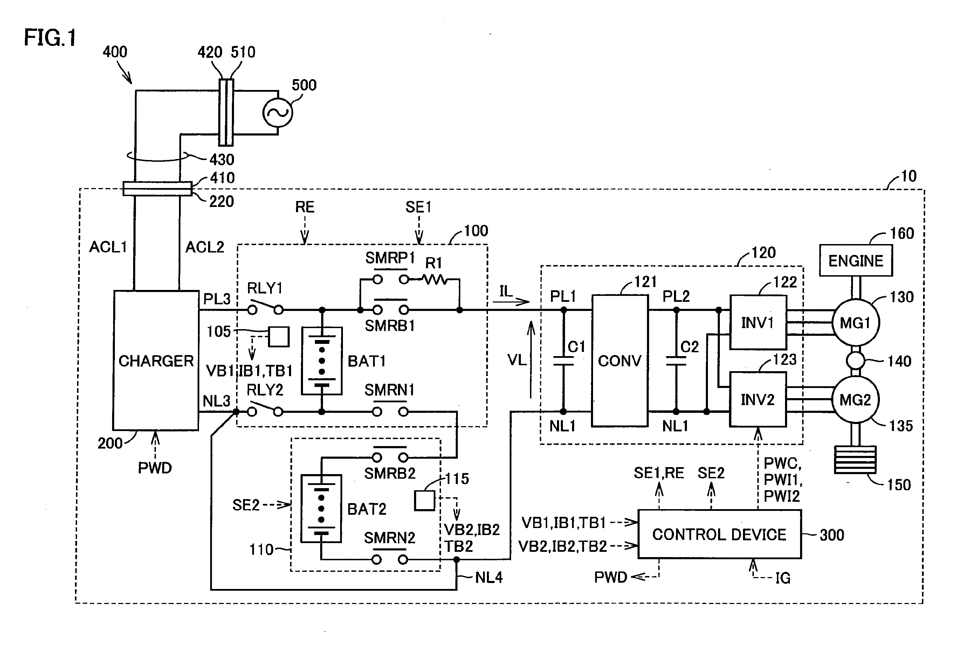

Fig. 1 is a schematic configuration diagram of a vehicle 10 to which a power supply system in accordance with Embodiment 1 of the present invention is applied.

Referring to Fig. 1, vehicle 10 is typically a hybrid vehicle, equipped with an internal combustion engine (engine) 160 and a motor (MG: Motor Generator), and travels by controlling drive forces therefrom at an optimal ratio. Further, vehicle 10 is equipped with a plurality of (for example, two) power storage devices for supplying electric power to the motor generator. These power storage devices can be charged by receiving motive power generated by the operation of engine 160 in a state where a system of vehicle 10 is started up (hereinafter also referred to as an "IG ON state"), and can be charged by being electrically connected to an external power supply 500 through a connection portion 220 in a state where the system of vehicle 10 is stopped (hereinafter also referred to as an "IG OFF state"). In the description below, in order to distinguish the respective charging operations, charging of a power storage unit by external power supply 500 will also be referred to as "external charging", and charging of the power storage unit by the operation of engine 160 will also be referred to as "internal charging".

Vehicle 10 includes a battery pack 100 corresponding to a "first battery pack", a battery pack 110 corresponding to a "second battery pack", a PCU (Power Control Unit) 120, motor generators 130, 135, a motive power transmission gear 140, drive wheels 150, engine 160, and a control device 300.

Battery pack 100 includes a power storage device BAT1 corresponding to a "first power storage device", system main relays SMRB1, SMRP1, SMRN1, a resistor R1, and charging relays RLY1, RLY2. Power storage device BAT1 is a rechargeable power storage element, and is typically composed of a secondary battery such as a lithium ion battery or a nickel hydride battery, or a power storage element such as an electric double layer capacitor. Power storage device BAT1 is provided with a battery sensor 105 for detecting a battery voltage VB 1, a battery current IB 1, and a battery temperature TB1. The values detected by battery sensor 105 are transmitted to control device 300.

System main relay SMRB1 is connected between a positive terminal of power storage device BAT1 and a power line PL1 connected to PCU 120. System main relay SMRP1 is connected in series with resistor R1, and system main relay SMRP1 and resistor R1 are connected in parallel with system main relay SMRB1. System main relay SMRN1 is connected between a negative terminal of power storage device BAT1 and a system main relay SMRB2 (described later). ON (closing) / OFF (opening) of system main relays SMRB1, SMRP1, SMRN1 is controlled by a relay control signal SE1 from control device 300.

Charging relay RELY1 is connected between the positive terminal of power storage device BAT1 and a power line PL3 connected to a charger 200. Charging relay RLY2 is connected between the negative terminal of power storage device BAT1 and a power line (ground line) NL3 connected to charger 200. ON (closing) / OFF (opening) of charging relays RLY1, RLY2 is controlled by a relay control signal RE from control device 300.

Battery pack 110 includes a power storage device BAT2 corresponding to a "second power storage device", and system main relays SMRB2, SMRN2. As with power storage device BAT1, power storage device BAT2 is a rechargeable power storage element, and is typically composed of a secondary battery such as a lithium ion battery or a nickel hydride battery, or a power storage element such as an electric double layer capacitor. Power storage device BAT2 is provided with a battery sensor 115 for detecting a battery voltage VB2, a battery current IB2, and a battery temperature TB2. The values detected by battery sensor 115 are transmitted to control device 300.

System main relay SMRB2 is connected between a positive terminal of power storage device BAT2 and system main relay SMRN1. System main relay SMRN2 is connected between a negative terminal of power storage device BAT2 and a power line (ground line) NL1. ON (closing) / OFF (opening) of system main relays SMRB2, SMRN2 is controlled by a relay control signal SE2 from control device 300.

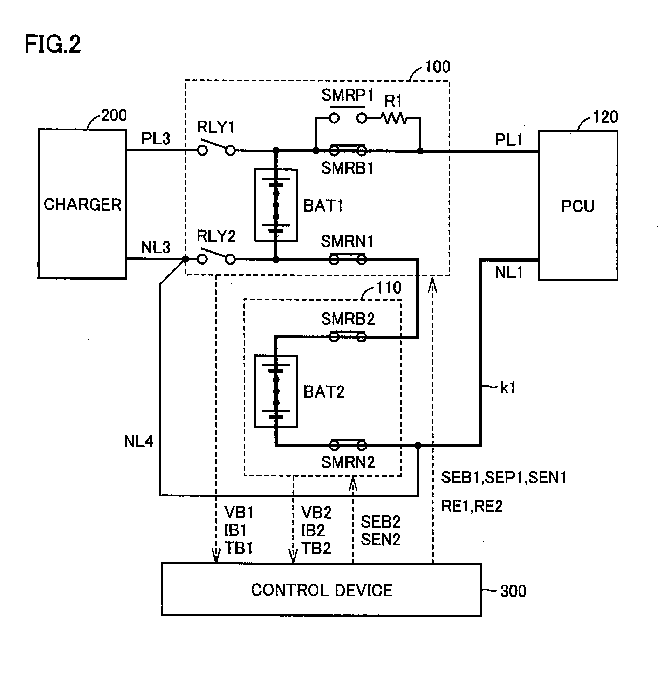

In the power supply system in accordance with Embodiment 1 of the present invention, battery packs 100, 110 are connected in series between power line PL1 and power line (ground line) NL1 connected to PCU 120. When vehicle 10 is in the IG ON state, system main relays SMRB1, SMRN1 in battery pack 100 and system main relays SMRB2, SMRN2 in battery pack 110 are turned on. Thereby, as shown in Fig. 2, power storage devices BAT1, BAT2 are connected in series between power line PL1 and power line NL1. Then, during traveling of vehicle 10, power storage devices BAT1, BAT2 supply PCU 120 with electric power for generating a drive force for vehicle 10 through an energization path k1 in Fig. 2. Further, during regenerative braking of vehicle 10, power storage devices BAT1, BAT2 store electric power generated by motor generators 130, 135.

Each relay shown in the present embodiment is typically composed of an electromagnetic relay which is closed (i.e., turned on) by connecting contacts at the time of energization and opened (i.e., turned off) by disconnecting the contacts at the time of de-energization. However, any switch including a semiconductor relay can be applied as long as it is configured to be able to control closing (OFF) and opening (OFF).

In the power supply system in accordance with Embodiment 1, system main relays SMRN1 and SMRB2 are used as a representative example of a "first switch" connected between the negative terminal of power storage device BAT1 and the positive terminal of power storage device BAT2. Further, system main relays SMRB1, SMRP1 and resistor R1 are used as a representative example of a "second switch" connected between the positive terminal of power storage device BAT1 and power line PL1 corresponding to a "first power line". System main relay SMRN2 is used as a representative example of a "third switch" connected between the negative terminal of power storage device BAT2 and power line NL1 corresponding to a "second power line".

Furthermore, charging relay RLY1 is used as a representative example of a "fourth switch" connected between the positive terminal of power storage device BAT1 and power line PL3 corresponding to a "third power line". Charging relay RLY2 is used as a representative example of a "fifth switch" connected between the negative terminal of power storage device BAT1 and power line NL3 corresponding to a "fourth power line".

It is noted that, in each of battery packs 100, 110, a relay is connected to each of the positive terminal and the negative terminal of the power storage device. Since the battery pack can be completely disconnected from the power supply system by turning off these relays, a configuration which is preferable in terms of safety can be provided. However, when power storage devices BAT1, BAT2 are configured to be integrally accommodated in a single battery pack, relays SMRN1, SMRB2 corresponding to the "first switch" may not be arranged.

Further, power line NL1 and power line NL3 are connected by a connection line NL4 corresponding to a "connection line" connecting the second power line with the fourth power line. Between power line NL1 and power line NL3 is formed an energization path in which charging relay RLY2, system main relay SMRN1, system main relay SMRB2, power storage device BAT2, and system main relay SMRN2 are inserted. Connection line NL4 forms a bypass path for bypassing the energization path, between power line NL3 and power line NL4.

PCU 120 is configured to perform bidirectional power conversion between motor generators 130, 135 and power storage devices BAT1, BAT2. PCU 120 includes a converter (CONV) 121, and a first inverter (INV1) 122 and a second inverter (INV2) 123 associated with motor generators 130 and 135, respectively.

Converter 121 is configured to perform bidirectional direct current (DC) voltage conversion between power storage devices BAT1, BAT2 and a power line PL2 which transmits DC link voltages of inverters 122, 123. That is, input/output voltages of power storage devices BAT1, BAT2 and a DC voltage between power line PL2 and power line (ground line) NL1 are boosted or bucked bidirectionally. Power line NL1 extends through converter 121 toward inverters 122, 123. Buck/Boost operations in converter 121 are respectively controlled in accordance with a switching command PWC from control device 300.

A capacitor C1 is connected between power line PL1 and power line NL1 to reduce voltage variation between power line PL1 and power line NL1. A capacitor C2 is connected between power line PL2 and power line NL1 to reduce voltage variation between power line PL2 and power line NL1.

First inverter 122 and second inverter 123 perform bidirectional power conversion between DC power of power line PL2 and power line NL1 and alternating current (AC) power to be input to or output from motor generators 130 and 135. Mainly, first inverter 122 converts AC power generated by motor generator 130 using an output of engine 160 into DC power, and supplies it to power line PL2 and power line NL1, in response to a switching command PWI1 from control device 300. Thereby, power storage devices BAT1, BAT2 can be actively charged using the output of engine 160 during traveling of the vehicle.

Further, when engine 160 is started, first inverter 122 converts DC power from power storage devices BAT1, BAT2 into AC power, and supplies it to motor generator 130, in response to switching command PWI1 from control device 300. Thereby, engine 160 can be started, using motor generator 130 as a starter.

Second inverter 123 converts DC power supplied through power line PL2 and power line NL1 into AC power, and supplies it to motor generator 135, in response to a switching command PWI2 from control device 300. Thereby, motor generator 135 generates a drive force for vehicle 10.

On the other hand, during regenerative braking of vehicle 10, motor generator 135 generates AC power as drive wheels 150 slow down. On this occasion, second inverter 123 converts the AC power generated by motor generator 135 into DC power, and supplies it to power line PL2 and power line NL1, in response to switching command PWI2 from control device 300. Thereby, power storage devices BAT1, BAT2 are charged when the vehicle slows down or travels downhill.

Control device 300 is typically composed of an electronic control unit (ECU) mainly composed of a CPU (Central Processing Unit), a memory region such as a RAM (Random Access Memory) and a ROM (Read Only Memory), and an input/output interface. Control device 300 performs control related to traveling of the vehicle and charging/discharging, by the CPU reading a program stored beforehand in the ROM or the like to the RAM and executing the same. It is noted that at least a portion of the ECU may be configured to perform predetermined numerical/logical computation processing using hardware such as an electronic circuit.

As information to be input to control device 300, Fig. 1 illustrates battery data from battery sensors 105, 115. The battery data includes battery voltage VB1, battery current IB1, and battery temperature TB1 of power storage device BAT1, and battery voltage VB2, battery current IB2, and battery temperature TB2 of power storage device BAT2. Although not shown, a DC voltage detection value VL detected by a voltage sensor arranged between lines of power line PL1 and power line NL1 (not shown), current detection values of phases of motor generators 130, 135, and rotation angle detection values of motor generators 130, 135 are also input to control device 300.

Further, control device 300 receives a signal IG from an ignition key (not shown). Signal IG is set to an H (logical high) level in a period in which the ignition key is ON, and is set to an L (logical low) level in a period in which the ignition key is OFF.

Motor generators 130, 135 are each an AC rotating electric machine, and for example a permanent magnet type synchronous motor provided with a rotor having a permanent magnet embedded therein. Output torques of motor generators 130, 135 are transmitted to drive wheels 150 and engine 160 through motive power transmission gear 140 configured to include a reducer and a motive power split mechanism, to cause vehicle 10 to travel. During regenerative braking of vehicle 10, motor generators 130, 135 can generate electric power using a rotational force of drive wheels 150. Then, the generated electric power is converted by PCU 120 into charging power for power storage devices BAT1, BAT2. In the present embodiment, it is assumed that motor generator 130 is exclusively operated as a generator for generating electric power by being driven by engine 160, and motor generator 135 is exclusively operated as a motor for driving drive wheels 150 to cause vehicle 10 to travel.

It is noted that, although Embodiment 1 describes a configuration having two pairs of a motor generator and an inverter as one example, a configuration having one pair or more than two pairs of a motor generator and an inverter may be adopted.

Further, although Embodiment 1 describes an exemplary case where vehicle 10 is a hybrid vehicle, the configuration of vehicle 10 is not limited as long as vehicle 10 is a vehicle equipped with a motor for generating a vehicle drive force using electric power from power storage devices BAT1, BAT2. That is, vehicle 10 includes not only a hybrid vehicle in which a vehicle drive force is generated by an engine and a motor as shown in Fig. 1, but also an electric vehicle, a fuel cell vehicle, or the like having no engine.

The power supply system for vehicle 10 is constituted by a portion of the configuration of vehicle 10 shown which does not include motor generators 130, 135, motive power transmission gear 140, engine 160, and drive wheels 150.

The power supply system in accordance with Embodiment 1 has a function of charging power storage devices BAT1, BAT2 using electric power from external power supply 500. That is, the power supply system is configured such that charging of power storage devices BAT1, BAT2 by external power supply 500 (i.e., external charging) can be performed.

Specifically, the power supply system further includes charger 200 and connection portion 220 as components for performing external charging of power storage devices BAT1, BAT2.

Connection portion 220 is provided on the body of vehicle 10. When vehicle 10 receives the electric power from external power supply 500, a charging connector 410 of a charging cable 400 is connected to connection portion 220. Then, a plug 420 of charging cable 400 is connected to an outlet 510 of external power supply 500, and thereby the electric power from external power supply 500 is transmitted to vehicle 10 through a wire portion 430 of charging cable 400. External power supply 500 is, for example, a commercial power supply of AC 100V.

It is noted that, in order to enable external charging, a configuration in which the external power supply and the vehicle are electromagnetically coupled without contacting each other to supply electric power, specifically, a configuration in which a primary coil is provided on the external power supply side and a secondary coil is provided on the vehicle side to supply electric power utilizing transconductance between the primary coil and the secondary coil, may also be adopted to receive electric power from the external power supply.

Charger 200 is connected to connection portion 220 through power lines ACL1, ACL2. Further, charger 200 is connected to battery pack 100 through power lines PL3, NL3. Then, during external charging, charger 200 converts AC power supplied from external power supply 500 into DC power, and supplies it to power storage devices BAT1, BAT2, in response to a control signal PWD from control device 300. It is noted that, although not shown, charger 200 includes an AC/DC converter for performing power conversion between the AC power and the DC power described above.

As described in Fig. 2, when vehicle 10 is in the IG ON state, power storage devices BAT1, BAT2 are connected in series between power line PL1 and power line NL1. Accordingly, during traveling of the vehicle, power storage devices BAT1, BAT2 can be internally charged by the electric power generated by motor generators 130, 135. Further, when vehicle 10 is in the IG OFF state, power storage devices BAT1, BAT2 can be externally charged after traveling of the vehicle, by connecting power storage devices BAT1, BAT2 in series between power line PL3 and power line NL3. Thus, vehicle 10 can travel with engine 160 being kept in a stopped state as much as possible, by using electric power stored in power storage devices BAT1, BAT2. As a result, when compared with a vehicle equipped with power storage device BAT1 only, a travelable distance achieved by so-called EV (Electric Vehicle) traveling, which is traveling using only the drive force from motor generator 135, can be increased, and energy efficiency of vehicle 10 can be improved.

On the other hand, if a failure occurs in power storage device BAT2 in a configuration as described above, power storage device BAT2 is electrically disconnected from the power supply system by turning off system main relays SMRB2, SMRN2 in battery pack 110, and thereby power storage device BAT1 is also substantially disconnected from the power supply system. Thus, when a failure occurs in power storage device BAT2, electric power stored in normal power storage device BAT1 cannot be supplied to PCU 120.

If there occurs a case where electric power cannot be supplied from power storage device BAT1 as described above, it is not possible to obtain the drive force by motor generator 135 using the electric power from power storage device BAT1. In particular, if there occurs a case where electric power cannot be supplied from power storage device BAT1 due to a failure in power storage device BAT2 during EV traveling, it is not possible to obtain the drive force by motor generator 135, and in addition, it is not possible to start engine 160 by driving motor generator 130 using the electric power from power storage device BAT1. As a result, the travelable distance in a retreat traveling may be limited.

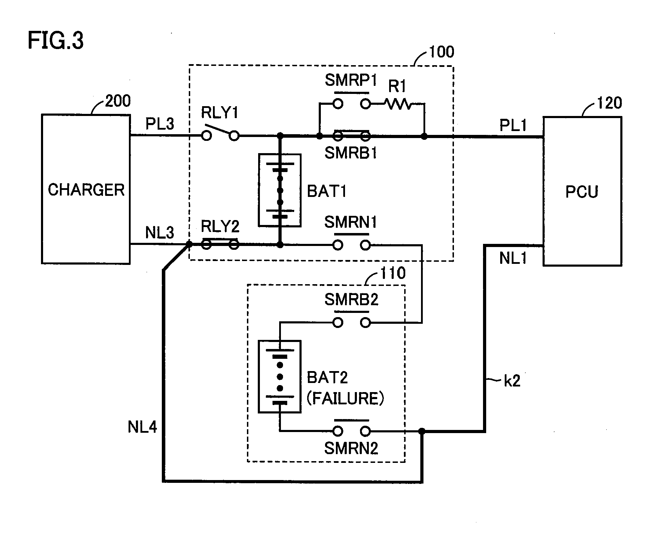

Therefore, in the power supply system in accordance with Embodiment 1 of the present invention, when a failure occurs in power storage device BAT2, control of the system relays and the charging relays is switched as shown in Fig. 3.

Fig. 3 is a view illustrating control of the system relays and the charging relays when a failure occurs in power storage device BAT2.

When power storage device BAT2 is normal, control device 300 sets the system main relays and the charging relays in a state shown in Fig. 2. That is, control device 300 turns on system main relays SMRB1, SMRN1, SMRB2, SMRN2, and turns off charging relays RLY1, RLY2.

When a failure occurs in power storage device BAT2 in this state, control device 300 turns on system main relay SMRB1 and charging relay RLY2, and turns off system main relays SMRN1, SMRB2, SMRN2, as shown in Fig. 3. That is, control device 300 electrically disconnects power storage device BAT2 from power storage device BAT1, and electrically connects power storage device BAT1 with power lines PL1 and NL1 through connection line NL4 forming the bypass path. Thereby, an energization path k2 is formed between power storage device BAT1 and PCU 120. Then, through energization path k2, power storage device BAT1 supplies PCU 120 with electric power for generating the drive force for vehicle 10. Further, during regenerative braking of vehicle 10, power storage device BAT1 stores electric power generated by motor generator 135. In this manner, when a failure occurs in power storage device BAT2, electric power for traveling can be supplied utilizing normal power storage device BAT1, and thus the travelable distance in the retreat traveling can be ensured.

As described above, the power supply system in accordance with Embodiment 1 of the present invention is configured such that switching can be performed between a state in which power storage device BAT1 is connected between power line PL1 and power line NL1 (hereinafter also referred to as a "first state") and a state in which power storage devices BAT1, BAT2 are connected in series between power line PL1 and power line NL1 (hereinafter also referred to as a "second state"). System main relays SMRN1, SMRB2 corresponding to the "first switch", system main relays SMRB1, SMRP1 and resistor R1 corresponding to the "second switch", system main relay SMRN2 corresponding to the "third switch", charging relay RLY1 corresponding to the "fourth switch", charging relay RLY2 corresponding to the "fifth switch", and connection line NL4 corresponding to the "connection line" constitute a "switching unit" for switching between the first state and the second state described above.

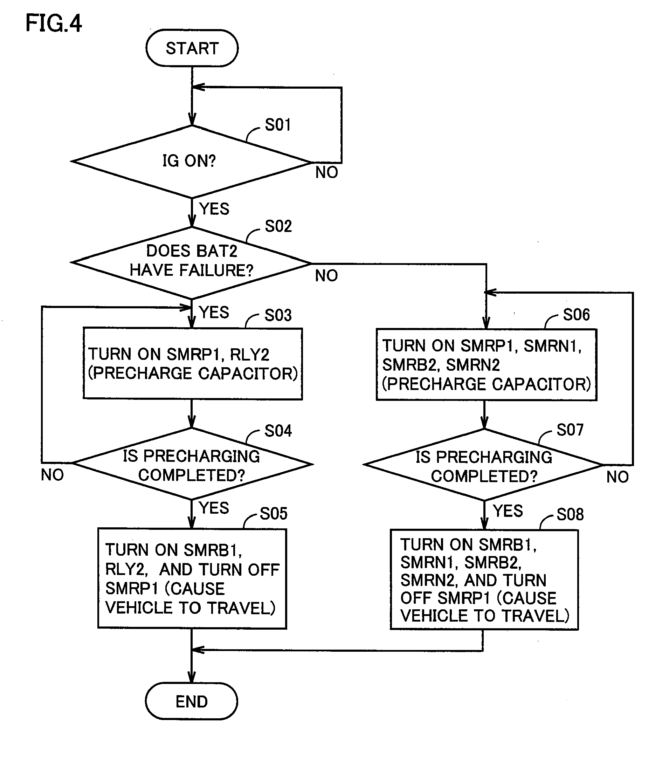

Fig. 4 is a flowchart illustrating a control processing procedure of the power supply system in accordance with Embodiment 1 of the present invention. Processing in each step of the flowcharts shown below, including that in Fig. 4, is executed by software processing or hardware processing by control device 300. Further, a series of control processing by each of the flowcharts shown below is executed by control device 300 every predetermined control cycle.

Referring to Fig. 4, control device 300 determines, by step S01, whether or not an operation to request start-up of the system of vehicle 10 (i.e., an IG ON operation) is performed by a user. When signal IG rises from an L level to an H level, control device 300 determines that an IG ON operation is performed. When an IG ON operation is not performed (i.e., NO in step S01), the processing is returned to the beginning.

On the other hand, when an IG ON operation is performed (i.e., YES in step S01), control device 300 determines, by step S02, whether or not a failure occurs in power storage device BAT2. For example, when an abnormality in a secondary battery constituting power storage device BAT2 or in battery sensor 115 is detected, control device 300 determines that a failure occurs in power storage device BAT2.

When control device 300 determines that a failure occurs in power storage device BAT2 (i.e., YES in step S02), control device 300 proceeds to step S03, and turns on system main relay SMRP1 and charging relay RLY2 by relay control signals SE1 and RE. Thereby, power storage device BAT1 is connected to power line PL1 through system main relay SMRP1 and resistor R1, and connected to power line NL1 through charging relay RLY2 and connection line NL4.

By supplying electric power from power storage device BAT1 to power lines PL1, NL1 by step S03, precharging of capacitor C1 is started. By turning on system main relay SMRP1, a precharge current for capacitor C1 is limited by resistor R1. Therefore, an inrush current at the start of power supply from power storage device BAT1 can be limited.

Control device 300 detects DC voltage VL, which is a voltage across terminals of capacitor C1, by the voltage sensor arranged between power line PL1 and power line NL1 (not shown). In step S04, control device 300 determines whether or not precharging of capacitor C1 is completed, based on DC voltage VL from this voltage sensor. When DC voltage VL from the voltage sensor does not reach battery voltage VB1 of power storage device BAT1, control device 300 determines that precharging of capacitor C1 is not completed (i.e., NO in step S04), and returns the processing to step S03.

On the other hand, when DC voltage VL from the voltage sensor reaches battery voltage VB1, control device 300 determines that precharging of capacitor C1 is completed (i.e., YES in step S04), and advances the processing to step S05. In step S05, control device 300 turns on system main relay SMRB1 and charging relay RLY2, and turns off system main relay SMRP1. Thereby, energization path k2 shown in Fig. 3 is formed between power storage device BAT1 and PCU 120. Through energization path k2, electric power from power storage device BAT1 is supplied to PCU 120, and thereby motor generator 135 generates the drive force for vehicle 10.

On the other hand, when control device 300 determines that no failure occurs in power storage device BAT2 (i.e., NO in step S02), control device 300 proceeds to step S06, and turns on system main relays SMRP1, SMRN1, SMRB2, SMRN2 by relay control signals SE1, SE2. Thereby, power storage devices BAT1, BAT2 are connected in series between power line PL1 and power line NL1 through system main relay SMRP1 and resistor R1.

By supplying electric power from power storage devices BAT1, BAT2 to power lines PL1, NL1 by step S06, precharging of capacitor C1 is started. As in step S03, by turning on system main relay SMRP1, a precharge current for capacitor C1 is limited by resistor R1. Therefore, an inrush current at the start of power supply from power storage devices BAT1, BAT2 can be limited.

In step S07, control device 300 determines whether or not precharging of capacitor C1 is completed, based on DC voltage VL from the voltage sensor. When DC voltage VL from the voltage sensor does not reach a total value of battery voltage VB1 of power storage device BAT1 and battery voltage VB2 of power storage device BAT2 (i.e., VB1+VB2), control device 300 determines that precharging of capacitor C1 is not completed (i.e., NO in step S07), and returns the processing to step S06.

On the other hand, when DC voltage VL from the voltage sensor reaches the total value (VB1+VB2), control device 300 determines that precharging of capacitor C1 is completed (i.e., YES in step S06), and advances the processing to step S08. In step S08, control device 300 turns on system main relays SMRB1, SMRN1, SMRB2, SMRN2, and turns off system main relay SMRP1. Thereby, energization path k1 shown in Fig. 2 is formed between power storage devices BAT1, BAT2 and PCU 120. Through energization path k1, electric power from power storage devices BAT1, BAT2 is supplied to PCU 120, and thereby motor generator 135 generates the drive force for vehicle 10.

As described above, according to Embodiment 1 of the present invention, in the power supply system including a plurality of power storage devices BAT1, BAT2 connected in series, the drive force for the vehicle can be generated using electric power from power storage device BAT1 only. Thereby, when a failure occurs in power storage device BAT2, electric power for traveling can be supplied utilizing normal power storage device BAT1, and thus the travelable distance in the retreat traveling can be ensured.

Further, since connection line NL4 is provided between power line NL1 and power line NL3 in the power supply system, switching between the state in which power storage devices BAT1, BAT2 are connected in series between power line PL1 and power line NL1 and the state in which only power storage device BAT1 is connected between power line PL1 and power line NL1 can be easily performed by turning on/off the relays (system main relays, charging relays) provided inside the battery packs. As a result, a power supply system which can effectively utilize a plurality of power storage devices can be configured in a small size and at low cost.

### [Embodiment 2]

Embodiment 2 describes control of the relays that can further limit the inrush current at the start of power supply from the plurality of power storage devices BAT1, BAT2 connected in series in the power supply system for the vehicle in accordance with Embodiment 1.

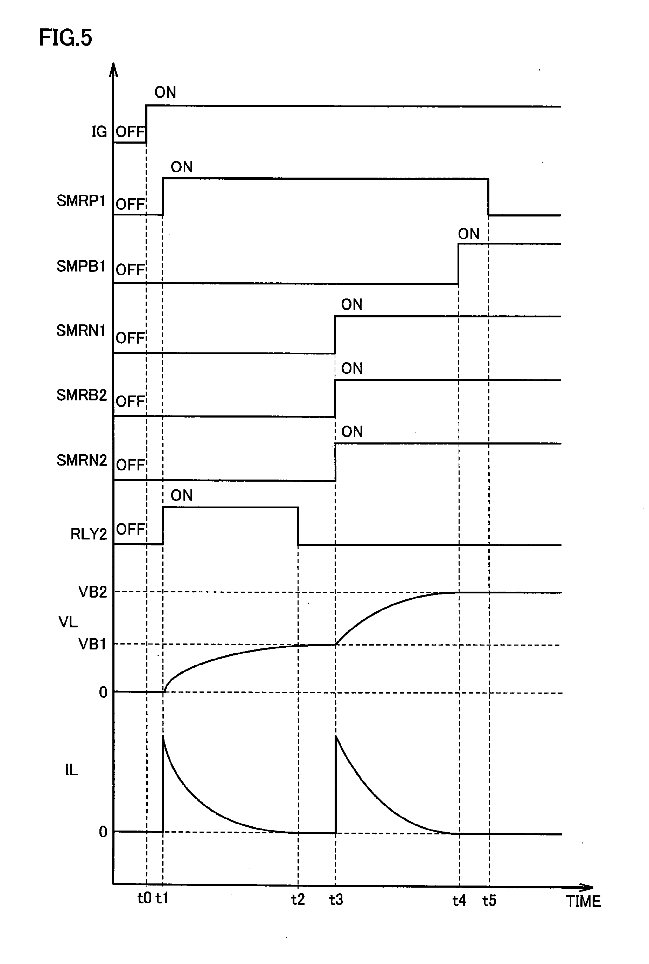

Fig. 5 is a timing chart for illustrating control of the system main relays and a charging relay when the system of vehicle 10 shown in Fig. 1 is started up.

Referring to Fig. 5, when an IG ON operation is performed by the user at a time t0, system main relay SMRP1 and charging relay RLY2 are turned on at a time t1. Thereby, power storage device BAT1 is connected to power line PL1 through system main relay SMRP1 and resistor R1, and connected to power line NL1 through charging relay RLY2 and connection line NL4.

By supplying electric power from power storage device BAT1 to power lines PL1, NL1, precharging of capacitor C1 is started. On this occasion, a DC current (precharge current) IL flowing to power line PL1 increases at time t1 at which precharging of capacitor C 1 is started, and thereafter gradually decreases as DC voltage VL increases.

When DC voltage VL reaches battery voltage VB 1 at a time t2, charging relay RLY2 is turned off. Further, system main relays SMRN1, SMRB2, SMRN2 are turned on at a time t3. Thereby, power storage devices BAT1, BAT2 are connected in series between power line PL1 and power line NL1 through system main relay SMRP1 and resistor R1.

By supplying electric power from power storage devices BAT1, BAT2 to power lines PL1, NL1, capacitor C1 is precharged. Thereby, at and after time t3, DC voltage VL increases from battery voltage VB1 as an initial value.

Here, when power storage devices BAT1, BAT2 are connected to power lines PL1, NL1 (at time t3), if there is a large voltage difference ΔV between DC voltage VL and the total value (VB1+VB2) of battery voltage VB1 of power storage device BAT1 and battery voltage VB2 of power storage device BAT2 (ΔV=VB1+VB2-VL), a large inrush current may flow into capacitor C1. In the system main relays, a contact may be welded by an arc generated by the inrush current. Further, resistor R1 for limiting current may be damaged.

In order to prevent damage of the system main relays and resistor R1, it is necessary to use large-capacity relays and resistor. Such a configuration leads to an increase in the size of the power supply system and cost increase.

In a power supply system in accordance with Embodiment 2, when power supply from the plurality of power storage devices BAT1, BAT2 is started, precharging of capacitor C1 is performed in two stages. That is, in a first stage, capacitor C1 is charged by supplying electric power from only power storage device BAT1 to power lines PL1, NL1. Then, when capacitor C1 is charged to battery voltage VB1, the first stage is switched to a second stage. In the second stage, capacitor C1 is charged by supplying electric power from power storage devices BAT1 and BAT1 to power lines PL1, NL1. Capacitor C1 is charged to the total value of battery voltages VB1 and VB2 (VB 1+VB2).

With such a configuration, DC voltage VL is substantially equal to battery voltage VB1 when power storage devices BAT1, BAT2 are connected to power lines PL1, NL1 (at time t3). Thus, voltage difference ΔV between DC voltage VL and the total value of battery voltages VB1, VB2 is substantially reduced to battery voltage VB2 of power storage device BAT2. This can suppress a rapid increase in current IL flowing through power line PL1 at time t3, and prevent a large inrush current from flowing into capacitor C1.

It is noted that, when power storage devices BAT1, BAT2 are configured such that output voltages of power storage devices BAT1 and BAT2 have an equal rated value, voltage difference ΔV obtained when power storage device BAT1 is connected to power lines PL1, NL1 (at time t1) is substantially equal to voltage difference ΔV obtained when power storage devices BAT1, BAT2 are connected to power lines PL1, NL1 (at time t3). Accordingly, DC current IL at time t1 and DC current IL at time t3 have a substantially equal current value. With such a configuration, system main relays and a current-limiting resistor used for a power supply system for a vehicle equipped with single power storage device BAT1 can also be used for the power supply system for the vehicle in accordance with the present invention without design change.

When DC voltage VL reaches a voltage VB1+VB2 at a time t4, system main relay SMRB1 is turned on, and subsequently system main relay SMRP1 is turned off at a time t5.

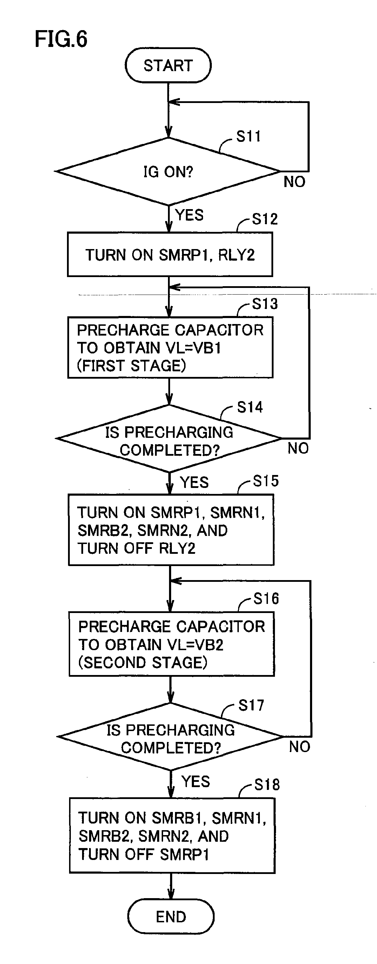

Fig. 6 is a flowchart illustrating a control processing procedure of the power supply system in accordance with Embodiment 2 of the present invention.

Referring to Fig. 6, control device 300 determines, by step S11, whether or not an IG ON operation is performed by the user. When an IG ON operation is not performed (i.e., NO in step S 11), the processing is returned to the beginning.

On the other hand, when an IG ON operation is performed (i.e., YES in step S11), by step S12, control device 300 turns on system main relay SMRP1 and charging relay RLY2 by relay control signals SE1 and RE. Thereby, power storage device BAT1 is connected to power line PL1 through system main relay SMRP1 and resistor R1, and connected to power line NL1 through charging relay RLY2 and connection line NL4.

By supplying electric power from power storage device BAT1 to power lines PL1, NL1 by step S03, the first stage of precharging of capacitor C1 is started. That is, capacitor C1 is charged to battery voltage VB1. On this occasion, a precharge current for capacitor C1 is limited by resistor R1.

In step S14, control device 300 determines whether or not the first stage of precharging is completed, based on DC voltage VL from a voltage sensor arranged between power line PL1 and power line NL1 (not shown). When DC voltage VL from the voltage sensor does not reach battery voltage VB1 of power storage device BAT1, control device 300 determines that the first stage of precharging is not completed (i.e., NO in step S14), and returns the processing to step S13.

On the other hand, when DC voltage VL from the voltage sensor reaches battery voltage VB1, control device 300 determines that the first stage of precharging is completed (i.e., YES in step S14), and advances the processing to step S15. In step S15, control device 300 turns on system main relays SMRP1, SMRN1, SMRB2, SMRN2, and turns off charging relay RLY2. Thereby, power storage devices BAT1, BAT2 are connected in series between power line PL1 and power line NL1 through system main relay SMRP1 and resistor R1.

By supplying electric power from power storage devices BAT1, BAT2 to power lines PL1, NL1 by step S15, the second stage of precharging is started. That is, capacitor C1 is charged to a total value of battery voltages VB1 and VB2 (VB1+VB2). On this occasion, a precharge current for capacitor C1 is limited by resistor R1.

In step S 17, control device 300 determines whether or not the second stage of precharging is completed, based on DC voltage VL from the voltage sensor. When DC voltage VL from the voltage sensor does not reach the total value of battery voltages VB1 and VB2 (VB1+VB2), control device 300 determines that the second stage of precharging is not completed (i.e., NO in step S 17), and returns the processing to step S16.

On the other hand, when DC voltage VL from the voltage sensor reaches the total value (VB1+VB2), control device 300 determines that the second stage of precharging is completed (i.e., YES in step S17), and advances the processing to step S18. In step S18, control device 300 turns on system main relays SMRB1, SMRN1, SMRB2, SMRN2, and turns off system main relay SMRP1. Thereby, energization path k1 shown in Fig. 2 is formed between power storage devices BAT1, BAT2 and PCU 120. Through energization path k1, electric power from power storage devices BAT1 and BAT2 is supplied to PCU 120. Thereby, motor generator 135 generates a drive force for vehicle 10.

As described above, according to Embodiment 2 of the present invention, in the power supply system including the plurality of power storage devices BAT1, BAT2 connected in series, when power supply from power storage devices BAT1, BAT2 is started, the number of power storage devices connected to power lines PL1, NL1 is increased in stages, which can prevent a large inrush current from flowing into capacitor C1.

Further, since the output voltages of the plurality of power storage devices have an equal rated value, precharge current IL for capacitor C 1 is maintained at a substantially constant current even if the number of power storage devices connected to power lines PL1, NL1 is increased. Thereby, system main relays and a current-limiting resistor used for a power supply system for a vehicle equipped with a single power storage device can also be used for the power supply system for the vehicle in accordance with the present invention without design change, and thus the power supply system can be configured simply and efficiently.

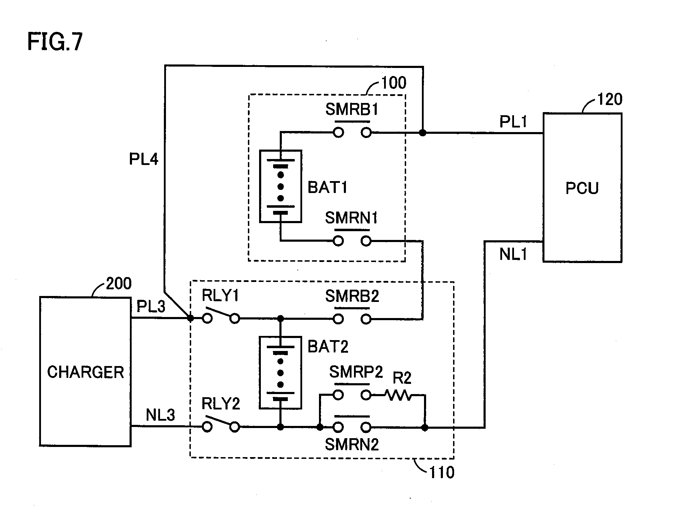

It is noted that, although Embodiments 1, 2 describe that the power supply system has a configuration in which power storage device BAT1 corresponding to the "first power storage device" is connected to power lines PL3, NL3 through charging relays RLY1, RLY2, and connection line NL4 is connected between power line NL1 and power line NL3, the configuration of the power supply system is not limited thereto. For example, the present invention is also applicable to a configuration in which power storage device BAT2 corresponding to the "second power storage device" is connected to power lines PL3, LN3 through charging relays RLY1, RLY2, and a connection line PL4 is connected between power line PL1 and power line PL3, as shown in Fig. 7.

In a power supply system shown in Fig. 7, a system main relay SMRP2 is connected in series with a resistor R2, and system main relay SMRP2 and resistor R2 are connected in parallel with system main relay SMRN2. System main relays SMRN2, SMRP2 and resistor R2 correspond to a "third switch", and system main relay SMRB1 corresponds to a "second switch".

Further, system main relays SMRN1, SMRB2 corresponding to a "first switch", system main relay SMRB1 corresponding to the "second switch", system main relays SMRN2, SMRP2 and resistor R2 corresponding to the "third switch", charging relay RELY1 corresponding to a "fourth switch", charging relay RLY2 corresponding to a "fifth switch", and connection line PL4 corresponding to a "connection line" constitute a "switching unit" in the present invention.

Specifically, when an IG ON operation is performed by the user, control device 300 firstly turns on charging relay RLY1 and system main relay SMRN2, and turns off system main relays SMRB1, SMRN1, SMRB2, SMRP2. Power storage device BAT2 is electrically connected to power lines PL1, NL1, and electric power is supplied from power storage device BAT2 to power lines PL1, NL1. Thereby, the first stage of precharging of capacitor C 1 is performed.

Next, control device 300 turns on system main relays SMRP1, SMRN1, SMRB2, SMRN2, and turns off charging relay RLY1, thereby connecting power storage devices BAT1, BAT2 in series between power line PL1 and power line NL1. By supplying electric power from power storage devices BAT1, BAT2 to power lines PL1, NL1, the second stage of precharging is performed. It is noted that, in both of the first stage of precharging and the second stage of precharging, precharge current IL for capacitor C1 is limited by resistor R2 connected in series with system main relay SMRP2.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### INDUSTRIAL APPLICABILITY

The present invention is applicable to a power supply system for a vehicle equipped with a plurality of power storage devices connected in series.

### REFERENCE SIGNS LIST

10: vehicle; 100, 110: battery pack; 105, 115: battery sensor; 120: PCU; 121: converter; 122, 123: inverter; 130, 135: motor generator; 140: motive power transmission gear; 150: drive wheel; 160: engine; 200: charger; 220: connection portion; 300: control device; 400: charging cable; 410: charging connector; 420: plug; 430: wire portion; 500: external power supply; 510: outlet; ACL1, ACL2, PL1, NL1, PL2, PL3, NL3: power line; BAT1, BAT2: power storage device; C1, C2: capacitor; NL4, PL4: connection line; RLY1, RLY2: charging relay; SMRB1, SMRN1, SMRB2, SMRN2, SMRP1, SMRP2: system main relay; R1, R2: resistor.

## Claims

1. A power supply system for a vehicle, comprising:
a power conversion unit (120) driving a motor for traveling;
first and second power lines (PL1, NL1) for transmitting electric power to be input to or output from said power conversion unit (120);
first and second power storage devices (BAT1, BAT2) each configured to be rechargeable;
a capacitor (C1) connected between said first power line (PL1) and said second power line (NL1);
a switching unit configured to be able to switch between a first state in which one of said first and second power storage devices (BAT1, BAT2) is connected between said first power line (PL1) and said second power line (NL1), and a second state in which said first and second power storage devices (BAT1, BAT2) are connected in series between said first power line (PL1) and said second power line (NL1); and
a control device (300) for setting said switching unit in said first state to charge said capacitor (C1), and thereafter setting said switching unit in said second state to charge said capacitor (C1).

2. The power supply system for the vehicle according to claim 1, further comprising third and fourth power lines (PL3, NL3) for transmitting electric power output from a charger (200) for charging said first and second power storage devices (BAT1, BAT2) during charging of said vehicle by a power supply external to the vehicle, wherein
said switching unit includes
a first switch (SMKN1, SMRB2) connected between a negative terminal of said first power storage device (BAT1) and a positive terminal of said second power storage device (BAT2),
a second switch (SMRB1, SMRP1, R1) connected between a positive terminal of said first power storage device (BAT1) and said first power line (PL 1),
a third switch (SMRN2) connected between a negative terminal of said second power storage device (BAT2) and said second power line (NL1),
a fourth switch (RLY1) connected between the positive terminal of said first power storage device (BAT1) and said third power line (PL3),
a fifth switch (RLY2) connected between the negative terminal of said first power storage device (BAT1) and said fourth power line (NL3), and
a connection line (NL4) connected between said second power line (NL1) and said fourth power line (NL3), and
said control device (300) sets said switching unit in said first state by turning on said second and fifth switches (SMRB1, SMRP1, R1, RLY2) and turning off said first, third, and fourth switches (SMRN1, SMRB2, SMRN2, RLY1), and sets said switching unit in said second state by turning on said first, second, and third switches (SMRB1, SMRP1, R1, SMRN1, SMRB2, SMRN2) and turning off said fourth and fifth switches (RLY1, RLY2).

3. The power supply system for the vehicle according to claim 2, wherein
said second switch (SMRB1, SMRP1, R1) includes
a relay (SMRP1) connected between the positive terminal of said first power storage device (BAT1) and said first power line (PL1), and
a resistor (R1) connected in series with said relay (SMRP1).

4. The power supply system for the vehicle according to claim 1, further comprising third and fourth power lines (PL3, NL3) for transmitting electric power output from a charger (200) for charging said first and second power storage devices (BAT1, BAT2) during charging of said vehicle by a power supply external to the vehicle, wherein
said switching unit includes
a first switch (SMRN1, SMRB2) connected between a negative terminal of said first power storage device (BAT1) and a positive terminal of said second power storage device (BAT2),
a second switch (SMRB 1) connected between a positive terminal of said first power storage device (BAT1) and said first power line (PL1),
a third switch (SMRN2, SMRP2, R2) connected between a negative terminal of said second power storage device (BAT2) and said second power line (NL1),
a fourth switch (RLY1) connected between the positive terminal of said second power storage device (BAT2) and said third power line (PL3),
a fifth switch (RLY2) connected between the negative terminal of said second power storage device (BAT2) and said fourth power line (NL3), and
a connection line (PL4) connected between said first power line (PL1) and said third power line (PL3), and
said control device (300) sets said switching unit in said first state by turning on said third and fourth switches (SMRN2, SMRP2, R2, RLY1) and turning off said first, second, and fifth switches (SMRN1, SMRB2, SMRB 1, RLY2), and sets said switching unit in said second state by turning on said first, second, and third switches (SMRN1, SMRB2, SMRB1, SMRN2, SMRP2, R2) and turning off said fourth and fifth switches (RLY1, RLY2).

5. The power supply system for the vehicle according to claim 4, wherein
said third switch (SMRN2, SMRP2, R2) includes
a relay (SMRP2) connected between the negative terminal of said second power storage device (BAT2) and said second power line (NL1), and
a resistor (R2) connected in series with said relay (SMRP2).
